# EUROPÄISCHE PATENTSCHRIFT

(11) **EP 1 171 872 B1**
(45) Veröffentlichungstag und Bekanntmachung des Hinweises auf die Patenterteilung: **29.09.2004**
(21) Anmeldenummer: 01913541.7
(22) Anmeldetag: 29.01.2001
(51) Int. Cl.: G10L 15/26, H04L 12/28, H04M 11/00

(54) **SPRACHSTEUERUNGSSYSTEM UND VERFAHREN**
VOICE CONTROL SYSTEM AND METHOD
SYSTEME DE COMMANDE VOCALE ET PROCEDE CORRESPONDANT

(30) Priorität: 28.01.2000 DE 10003779
(43) Veröffentlichungstag der Anmeldung: 16.01.2002
(73) Patentinhaber: Horacek, Gregor, 56235 Ransbach-Baumbach (DE); Majchrzyk-Horacek, Matthias, 55578 Wallertheim (DE)
(72) Erfinder: MAJCHRZYK-HORACEK, Matthias, 55578 Wallertheim (DE)
(74) Vertreter: Richardt, Markus, Dipl.-Ing.
(86) Internationale Anmeldenummer: PCT/DE2001/000341
(87) Internationale Veröffentlichungsnummer: WO 2001/056019

(56) Entgegenhaltungen:
- EP-A- 0 911 808
- US-A- 4 918 615
- US-A- 5 878 394

## Beschreibung

Die Erfindung betrifft ein Steuerungssystem und Verfahren zur Steuerung von Geräten mit Hilfe von Spracherkennung.

Aus der DE 31 15 521 A1, DE 196 15 437 C1 und der EP 0 911 808 A1 ist ein Verfahren zur Fernsteuerung elektrischer bzw. elektronischer Geräte bekannt, das mit Hilfe eines Spracherkennungsverfahrens funktioniert. Bei diesem Verfahren erfolgt die Steuerung über Schlüsselwörter. Die DE 42 14 668 A1 betrifft eine Weiterbildung dieses Verfahrens durch Verwendung einer graphischen Benutzeroberfläche.

Aus der US 5 878 394 ist ein Verfahren und eine Vorrichtung für die sprachgesteuerte Fernsteuerung von elektrischen Verbrauchern mittels über einen Standard PC einzugebender Sprachkommandos bekannt. Die Ausgabe von Steuerungssequenzen erfolgt über infrarot-kodierte Signale.

Aus der DE 195 17 404 A 1, DE 43 21 304 A1, DE 198 03 009 A1 und der DE 197 43 367 A1 sind Verfahren bekannt bei denen die Sprache mittels Telkommunikationsleitungen zum Spracherkenner zugeführt werden um die Fernsteuerung / Femüberwachung von elektrischen bzw. elektronischen Verbrauchern zu realisieren.
Der Erfindung liegt die Aufgabe zugrunde, ein verbessertes Sprachsteuerungssystem und Verfahren zu schaffen.

Die erfindungsgemäße Lösung dieser Aufgabe ist jeweils durch die Merkmale der unabhängigen Patentansprüche wiedergegeben. Die Unteransprüche enthalten vorteilhafte Aus- und Weiterbildungen der Erfindung.

Nach der Erfindung ist es möglich, die Spracheingabe in den Computer des Steuerungssystems über eine oder mehrere Telefonverbindungen vorzunehmen. Hierfür kann beispielsweise ein handelsüblicher Personal Computer (PC), der mit einer oder mehreren Kommunikationseinheiten zum Anschluß des Computers an eine Telekommunikations (TK)-Anlage ausgerüstet ist, verwendet werden.
Vorteilhafterweise handelt es sich bei den Kommunikationseinheiten um ISDN-Karten zum Einbau in den Computer. Es können aber auch externe aktive oder passive ISDN-Kommunikationseinheiten zur Anwendung kommen.

Es ist möglich den Anrufer, der sich auf das System aufwählt (intern oder extern), zu bestimmen (Caller Line Identifikation Presentation / CLIP), und ihm entsprechend ein Programmteil zuzuordnen. Dadurch entsteht eine Mehrplatzlösung, die es möglich macht, dass mehrere Anwender gleichzeitig auf das System zugreifen können, jedoch nur jeder auf seinen Bereich oder auf Gemeinschaftsbereiche über die die Steuerung Einfluß nimmt. Ein Anwendungsbeispiel hierfür ist der Einsatz der Steuerung in einem Behindertenheim, einer Wohnstätte für altersgerechtes Wohnen oder einem Büro.

Zum Beispiel kann jedem Telefon der Mehrplatzlösung eine eindeutige Rufnummer zugeordnet sein. Bei einem Anruf von einem Telefon wird dessen Rufnummer mit zu dem Computer übertragen. In dem Computer sind Zuordnungen von Rufnummern zu autorisierten Steuerungskommandos vordefiniert. Nicht jeder Nutzer kann also auf alle grundsätzlich möglichen Steuerungsfunktionen des Systems verfügen.

In einem Büro etwa sind die Zuordnungen der Telefonnummer jedes Mitarbeiters zu den möglichen Steurungskommandos betreffend den jeweiligen Arbeitsplatz in dem Computer gespeichert. Ruft ein bestimmter Mitarbeiter das Steuerungssystem an, so kann er nur über diese ihm zugeordneten seinen unmittelbaren Arbeitsplatz betreffende Steuerungskommandos verfügen. Erfolgt die Eingabe eines für diesen Mitarbeiter nicht autorisierten Steuerungskommandos, so wird dieses vom Steuerungssystem nicht ausgeführt. Vorzugsweise gibt das Steuerungssystem in diesem Fall dem Mitarbeiter über die Telefonverbindung eine entsprechende Rückmeldung.

Hinsichtlich der autorisierten Steuerungskommandos kann es Überlappungen zwischen verschiedenen Mitarbeitern geben, so dass Gemeinschaftsbereiche entstehen, d.h. ein bestimmtes Steuerungskommando kann auch für eine Teilgruppe von Mitarbeitern autorisiert sein. Entsprechende Zuordnungen von Rufnummern und autorisierten Steuerungskommandos lassen sich bei Anwendugen im häuslichen Bereich oder Heimen vornehmen.

An die TK-Anlage kann ein schnurloses Telefon angeschlossen werden, vorzugsweise ein Telefon nach dem DECT-Standard. Der in den Computer eingebauten ISDN-Karte ist eine bestimmte Telefonnummer zugeordnet. Erfolgt ein Anruf dieser Telefonnummer von dem schnurlosen Telefon aus, so wird über die TK-Anlage eine gebührenfreie Telefonverbindung mit dem Computer hergestellt. Dies hat den Vorteil, dass innerhalb der Reichweite des schnurlosen Telefons von jedem Punkt des Hauses aus Sprachkommandos in den Computer eingegeben werden können, ohne dass dabei Gebühren anfallen.

Andererseits ist auch der Anruf der ISDN-Karte von einem externen Telefon über das öffentliche Telefonnetz möglich, an welches die TK-Anlage geschaltet ist. Dies erlaubt die Eingabe von Sprachkommandos in den Computer beispielsweise vom Urlaubsort zum Einschalten der Heizung oder für die Vornahme von Prüf- oder Wartungsarbeiten, ohne dass ein Techniker ins Haus kommen muß.

Die Möglichkeit der Steuerung per Sprache erstreckt sich auch über die Telefonie.

Hier greift der Spracherkenner auf die Komponenten ISDN-Karte und TK-Anlage zu und ermöglicht die Durchführung folgender Leistungsmerkmale:
1. Freie Ziffernwahl intern/extern.
   Hier nennt der Nutzer nacheinander die von Ihm zur Anwahl eines Zieles benötigten Ziffern. Nach einer Wiedergabe derselben, können diese nach Bestätigung zur Wahl freigegeben werden.
2. Wahl aus Telefonbuch (zentrale Kurzwahl).
   Hier wird nach Nennen eines im Telefonbuch abgelegten Namens die entsprechende Rufnummer gewählt. Das evtl. in der TK-Anlage vorhandene Telefonbuch kann durch Datenexport leicht eingebunden werden.
3. Rufannahme von internen und externen Gesprächen.
   Werden eingehende Gespräche durch zusätzliche Telefone oder Zusatzklingeln angezeigt, so besteht die Möglichkeit das anstehende Gespräch per Sprachbefehl anzunehmen.
4. Türabfrage und Öffnen der Tür.
   Türsprechstellen, die an die Telefonanlage angeschlossen sind, können abgefragt werden. Ein Öffnen der Tür ist nach dem Gespräch oder direkt aus dem Kommunikationsmenü möglich.
5. Anrufbeantworter verwalten.
   Das Verwalten eines Anrufbeantworters (Mailbox) ist in den Bereichen Abhören, Archivieren und Löschen von Nachrichten realisiert.
6. E-Mails lesen.
   Weiterhin ist es möglich E-Mails mit einer "Text to Speech"- Software in eine Datei mit WAV-Extension umzuformen und entsprechend in den Datenbereich der Mailbox zu legen. Dadurch ist das "Abhören" von E-Mails über die Mailboxfunktion durchführbar.

Alle genannten Verbindungsarten können vom Steuertelefon per Sprachbefehl getrennt werden. Nach der Trennung befindet man sich wieder im Kopfmenü der Steuerung.

Zur Erkennung der natürlich sprachlichen Sprachkommandos durch den Computer kann eine handelsübliche Spracherkennungssoftware verwendet werden. Nach Erkennung der Sprachkommandos und der entsprechenden Zuordnung von Steuerungskommandos werden diese Steuerungskommandos auf einen externen Datenbus ausgegeben. Der externe Datenbus wird dabei zur Übertragung der Steuerungskommandos an Geräte verwendet.

Vorteilhafterweise handelt es sich bei dem externen Datenbus um einen Hausinstallationsbus, insbesondere einen EIB-Instabus. Es können aber auch beliebige andere externe Datenbusse verwendet werden, etwa der Controled Area Network (CAN)-Bus oder ein Bus nach dem JINI Standard. Die Verwendung des CAN-Bus kommt insbesondere bei Anwendungen der Erfindung in oder für Fahrzeuge, insbesondere Autos, in Betracht. Die Druckschrift IEEE Spectrum, Dezember 1999, Seiten 26 bis 33, gibt einen Überblick über Bussysteme und deren Anwendungen im häuslichen Bereich.

Über einen Bus nach dem JINI Standard können beliebige Geräte, beispielsweise Büro- und Haushaltsgeräte, gesteuert werden. Die Kommunikation über den JINI Standard beruht auf der Java Remote Method Invocation (RMI). Zur Datenübertragung über den so definierten Bus können fest installierte Netze oder Infrarot Transceiver dienen.

Ein Hausinstallationsbus wird vorteilhafterweise für Steuerungsaufgaben im Haushalt und der Gebäudesystemtechnik verwendet. Der Hausinstallationsbus kann z.B. für das Hausgerätemanagement, die Fensterüberwachung, die Heizungssteuerung, die Einzelraumregelung der Raumtemperatur, Bewegungsmelder, die Steuerung der Alarmanlage, die Störungsmeldung, Torüberwachung, Raumbe- und Entlüftung, die Jalousiesteuerung, die Beleuchtungssteuerung und die Anwesenheitssimulation verwendet werden. Die Erfindung ermöglicht die Steuerung dieser Funktionen mittels Spracheingabe über Telefon, wodurch ein sehr hohes Maß an Bequemlichkeit und Effizienz gewährleistet ist.

Die Anbindung des Hausinstallationsbus an den Computer erfolgt dabei vorteilhafterweise über ein LAN, insbesondere ein Ethemet, welches über ein Gateway oder eine Bridge mit dem Hausinstallationsbus gekoppelt ist. Zur Kommunikation zwischen dem Computer und dem Gateway bzw. der Bridge wird dabei vorteilhafterweise das TCP/IP-Protokoll verwendet. Gateways zum EIB-Hausinstallationsbus sind kommerziell erhältlich.

Darüber hinaus kann das erfindungsgemäße Steuerungssystem mit Infrarotausgabemitteln, insbesondere einem Infrarot-Geber, verbunden werden. Dies ermöglicht zusätzlich die Steuerung von Geräten, die nicht über den externen Datenbus erreicht werden können, und die über eine Infrarot-Schnittstelle verfügen.

Hierbei handelt es sich typischerweise um Geräte der Unterhaltungselektronik, beispielsweise Fernseh-, Rundfunk-, Video- und Phono-Geräte aber auch Geräte der Haustechnik. Das Steuerungssystem kann dann also zwei unterschiedliche Gerätearten ansprechen: Geräte mit einer Infrarotschnittstelle, insbesondere einem Infrarotempfänger, und Geräte, die an den externen Datenbus anschließbar sind. Je nachdem, an welche Geräteart sich ein Steuerungskommando richtet, erfolgt dessen Ausgabe über die Infrarotausgabemittel oder den externen Datenbus.

Die Zuordnung der zu steuernden Geräte zu den Infrarot-Ausgabemitteln bzw. dem externen Datenbus erfolgt dabei vorzugsweise bei der Konfiguration des Steuerungssystems. Darüber hinaus kann das Steuerungssystem zur Zuordnung von Steuerungskommandos zu den erkannten Sprachkommandos auf eine Datenbank zugreifen. Diese Datenbank umfasst in vorteilhafter Weise die Hausinstallationsbus-Projektdaten, die bei der Konfiguration eines Hausinstallationsbus definiert werden. Darüber hinaus kann diese Datenbank auch Informationen über die Konfiguration der über die Infrarotschnittstelle zu erreichenden Geräte beinhalten.

Zur Verbesserung der Sicherheit des Steuerungssystems kann dieses mit einer Zeitsperre versehen sein, welche aktiviert wird, wenn während längerer Zeit kein neues Sprachkommando erkannt worden ist. Dadurch können unbeabsichtigte Spracheingaben vermieden werden.

Das Steuerungssystem kann auch mit einer Freisprecheinrichtung oder einem gesonderten Mikrophon, beispielsweise einem Deckenmikrophon, eingesetzt werden. Die Spracheingabe des Benutzers erfolgt dann über die Freisprecheinrichtung des Telefons oder über ein gesondertes an das Telefon anschließbares Mikrophon.

Bei der Verwendung eines Deckenmikrophons kann dieses drahtlos oder über eine Leitung mit dem Telefon verbunden sein oder unmittelbar eine bauliche Einheit mit einem Telefon-Modul bilden. Um den Verkabelungsaufwand zu minimieren, kann das Telefonmodul des Deckenmikrophons beispielsweise nach dem DECT-Standard ausgebildet sein, um drahtlos mit der Telekommunikationsanlage zu kommunizieren.

Bei der Verwendung eines Deckenmikrophons wird die entsprechende Telefonverbindung vorteilhafterweise ständig gehalten. Betritt eine Person den mit dem Deckenmikrophon ausgestatteten Raum, so kann die Person durch Sprechen bestimmter Sprachkommandos von jedem Punkt des Raumes aus die gewünschten Schalt- oder Steuerungsvorgänge auslösen, ohne über das blose Sprechen des Sprachkommandos hinaus tätig werden zu müssen: Ein von der Person gegebenes Sprachkommando wird von dem Deckenmikrophon aufgenommen und über das Telefonmodul beispielsweise über die Telekommunikationsanlage zu dem Eingang des Computers übertragen, der die Spracherkennung vornimmt. Das erkannte Sprachkommando wird zusammen mit der Nebenstellennummer des dem Deckenmikrophon zugeordneten Telefon-Moduls für eine Datenbankabfrage benutzt, um das entsprechende Steuerungskommando abzufragen. Dieses wird dann über das entsprechende Kommunikationsmedium von dem Computer ausgegeben.

Das erfindungsgemäße Steuerungssystem wird vorteilhafterweise mit einem dedizierten Computer betrieben, der ausschließlich für die Zwecke des Steuerungssystems verwendet wird, nicht aber für weitere Anwendungen. Nachdem das Steuerungssystem einmal konfiguriert ist, kann für den Regelbetrieb auf einen Monitor verzichtet werden. Dies hat den Vorteil der Einsparung von Stromkosten. Ferner ist es dadurch möglich, eine kostengünstige unterbrechungsfreie Stromversorgung im Kleinleistungsbereich zur Sicherstellung der Funktionsfähigkeit des Steuerungssystems bei Stromausfällen einzusetzen.

Die Verwendung eines dedizierten Computers hat weiter den Vorteil, dass dieser mit dem Gateway ein LAN bildet, so dass keine Netzwerksverbindung zur Aussenwelt besteht und damit keine unerwünschten Zugriffe von nicht autorisierten Personen erfolgen können.

Ein Ausführungsbeispiel der Erfindung ist in der Zeichnung dargestellt und wird im folgenden näher beschrieben:

Es zeigen
- Figur 1: ein Blockschaltbild des Steuerungssystems,
- Figur 2: ein Funktionsdiagramm für das Steuerungsverfahren mittels Spracheingabe,
- Figur 3: ein Blockschaltbild einer bevorzugten Ausführungsform des Steuerungssystems mit Deckenmikrophonen und
- Figur 4: ein Blockdiagramm der Komponenten des Computers des Steuerungssystems der Figur 3

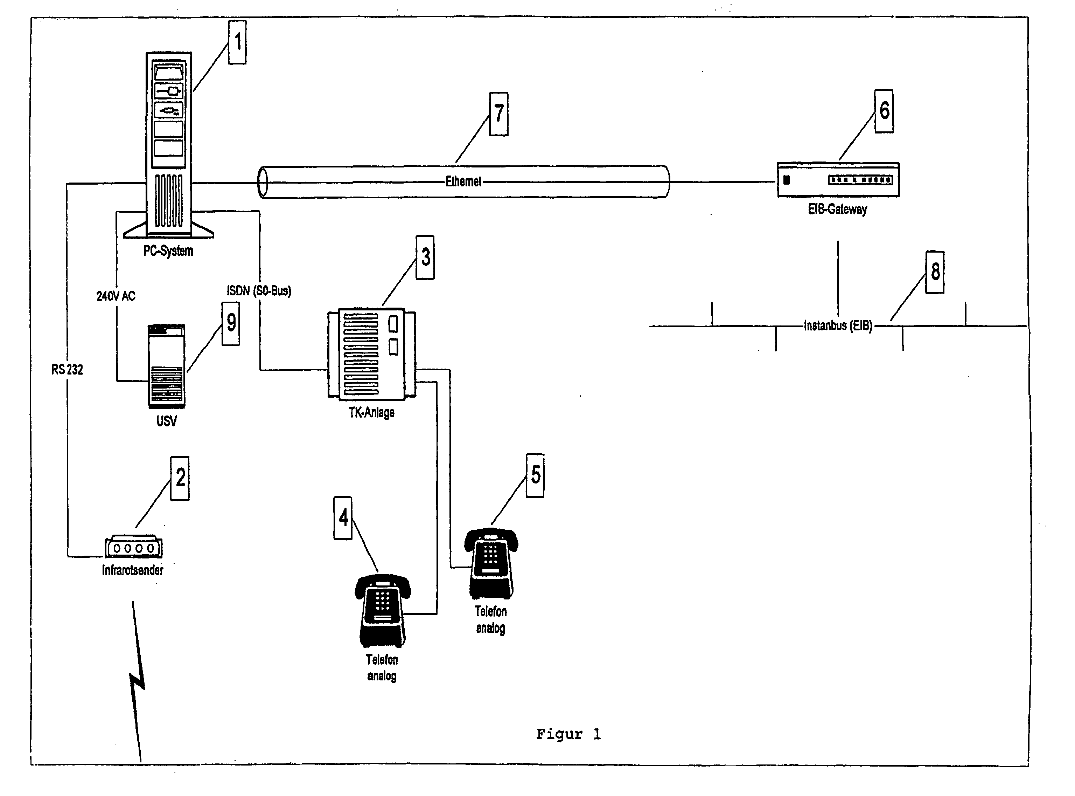

Das Sprachsteuerungssystem der Figur 1 weist einen PC 1 auf. Bei dem PC 1 handelt es sich vorzugsweise um einen IBM-kompatiblen PC, jedoch ist auch die Verwendung eines anderen Computertyps, etwa eines Macintosh-PCs möglich. Als Betriebssystem kommt in dem hier betrachteten Ausführungsbeispiel Windows 95, 98 oder Windows NT zum Einsatz. Ebenso kann jedoch auch ein anderes Betriebssystem, wie etwa LINUX oder ein Macintosh -Betriebssystem eingesetzt werden.

Der PC 1 läuft dediziert, d.h. er wird ausschließlich für die Zwecke des Sprachsteuerungssystems eingesetzt und nicht parallel für andere Aufgaben, wie z.B. Textverarbeitung oder ähnliches genutzt. Hierdurch ist gewährleistet, dass beim Betrieb des Steuerungssystems keine Wechselwirkungen mit anderen Programmen auftreten, die die Funktionsfähigkeit des Steuerungssystems beeinflussen oder stören könnten. Insbesondere ein Systemabsturz wird hierdurch praktisch ausgeschlossen. Dies ist besonders beim Einsatz des Steuerungssystems für sicherheitsrelevante Aufgaben, etwa die Steuerung der Alarmanlage oder sonstige kritische Anwendungen, wie etwa die Steuerung der Heizung, vorteilhaft.

Da der PC 1 dediziert lediglich für das Steuerungssystem eingesetzt wird, bestehen keine besonderen Leistungsanforderungen an dessen Ausstattung mit Arbeitsspeicher, Graphikkarten und Festplattenkapazität. Der Arbeitsspeicher des PC 1 sollte jedoch mindestens 64MB groß sein. Auf einen Monitor für den PC 1 kann verzichtet werden, insbesondere für den Regelbetrieb, d.h. nach Konfiguration des Steuerungssystems.

Ferner weist der PC 1 eine oder mehrere eingebaute ISDN-Karten auf. In dem betrachteten Beispiel handelt es sich dabei um eine passive Zweikanal ISDN-Karte. Es kann jedoch auch eine etwas kostspieligere aktive ISDN-Karte oder eine oder mehrere 30-Kanal ISDN-Primärmultiplexkarten mit dem PC 1 verwendet werden.

Der PC 1 weist ferner eine NE2000 kompatible 10 Megabit Ethernet-Netzkarte auf. Die Ethernet-Netzkarte sollte vorteilhafterweise den IEEE 802.3, 10Base-2 und 10Base-T Standards entsprechen. Für den Fall der Verwendung einer anderen Netzwerkstechnologie, z.B. des CAN-Bus, wird in den PC 1 entsprechend eine andere Netzkarte, die dem gewählten Standard entspricht, eingebaut.

Der PC 1 weist ferner eine RS 232-Schnittstelle auf, an die ein Infrarot-Geber 2 über ein Shielded Twisted Pair (STP)-Kabel mit einem SUB-D-Stecker auf einem RJ 45-Adapter angeschlossen ist.

Die in dem PC 1 eingebaute ISDN-Karte dient zum Anschluß des PC 1 an eine Telekommunikations (TK)-Anlage 3. Die Verbindung zwischen der ISDN-Karte und der TK-Anlage erfolgt über den internen ISDN S0-Bus. Die TK-Anlage 3 ist über eine Telefonbuchse mit dem öffentlichen Telefonnetz verbunden. Ferner weist die TK-Anlage 3 Anschlußbuchsen zum Anschluß weiterer ISDN oder analoger Telefone auf.

In dem hier betrachteten Ausführungsbeispiel sind die beiden analogen Telefone 4 und 5 jeweils mit einem analogen Anschluß der TK-Anlage 3 verbunden. Vorteilhafterweise handelt es sich bei zumindest einem der Telefone 4, 5 um ein schnurloses Telefon nach dem DECT-Standard. Das DECT-Funkinterface kann in der TK-Anlage 3 integriert sein, wie das etwa bei der ISDN Anlage Typ "Gigaset" der Firma Siemens der Fall ist.

Die in den PC 1 eingebaute Netzkarte dient zur Verbindung des PC 1 mit dem EIB-Gateway 6 über das Ethemet-Kabel 7. Bei dem Ethernet-Kabel 7 handelt es sich um ein RJ45-STP-Kabel oder ein BNC-Koaxialkabel.

Das EIB-Gateway 6 ist mit dem EIB-Instabus 8 verbunden, so dass Steuerungskommandos von dem PC 1 über das Ethernetkabel 7 und das EIB-Gateway 6 auf dem EIB-Instabus 8 ausgegeben werden können.

Auf dem PC 1 ist ferner eine Spracherkennungssoftware installiert, die zur Erkennung der über die Telefonverbindung in den Computer eingegebenen Sprachkommandos dient. Es handelt sich dabei um eine modularisierte Spracherkennungssoftware, die an den CAPI-Treiber der ISDN-Karte angebunden ist. Vorzugsweise kommt der ISDN-CAPI-Treiber Version 2.0 zum Einsatz.

Zur Verarbeitung der von der Spracherkennungssoftware erkannten Sprachkommandos weist der PC 1 ein weiteres Softwaremodul auf, welches der Zuordnung von Steuerungskommandos zu den erkannten Sprachkommandos dient. Zur Durchführung dieser Zuordnung kann das Softwaremodul auf Hausinstallations-Projektdaten zugreifen.

Darüber hinaus ist in dem PC 1 ein Treiber für den Infrarot-Geber 2 sowie Konfigurationssoftware für den Infrarot-Geber 2 installiert. Das Softwaremodul zur Zuordnung der Steuerungskommandos kann ebenfalls auf die entsprechenden Konfigurationsdaten für den Infrarot-Geber 2 zugreifen.

Ferner ist eine Treibersoftware für den EIB-Instabus 8, das EIB-Gateway 6 sowie Konfigurationssoftware für den EIB-Instabus und das EIB-Gateway 6 installiert.

Der PC 1 ist über eine unterbrechungsfreie Stromversorgung 9 mit der Netzspannung verbunden. Die Stromversorgung 9 ist für den Kleinleistungsbereich ausgelegt, da der PC 1 im Regelbetrieb ohne Monitor betrieben wird.

Die Konfiguration des Steuerungssystems erfolgt durch Eingabe von gerätespezifischen Daten mittels der Konfigurationssoftware für den Infrarot-Geber 2 und der Konfigurationssoftware für den EIB-Instabus 8. Aufgrund dieser Konfiguration wird die Zuordnung von zu steuernden Geräten zu dem Infrarot-Geber 2 bzw. dem EIB-Instabus 8 vorgenommen. Hinsichtlich des EIB-Instabus 8 liegen diese Daten als Hausinstallationsbus-Projektdaten vor. Nach der Konfiguration des Steuerungssystems kann dies wie folgt betrieben werden:

Zunächst erfolgt ein Anruf eines Benutzers, über eines der Telefone 4 oder 5, an die der ISDN-Karte zugeordnete Rufnummer.

Der PC 1 nimmt diesen Anruf entgegen und startet die Spracherkennungssoftware. Spricht der Benutzer ein natürlich sprachliches Sprachkommando in das Telefon, so wird dieses Sprachkommando über die so aufgebaute Telefonverbindung und über die ISDN-Karte in einen Eingang des PC 1 eingegeben. Die Spracherkennungssoftware erkennt dann das Sprachkommando.

Dem Sprachkommando wird dann mittels des Softwaremoduls unter Rückgriff auf die Geräte- und Konfigurationsdaten ein Steuerungskommando zugeordnet. Richtet sich das Steuerungskommando an ein an den EIB-Instabus 8 angeschlossenes Gerät, so erfolgt die Ausgabe dieses Steuerungskommandos über die Netzkarte des PC 1, das Ethernet-Kabel 7 und das EIB-Gateway 6 auf den EIB-Instabus 8 unter Verwendung des TCP/IP-Protokolls. Der EIB-Instabus 8 überträgt dann das Steuerungskommando zu dem betreffenden Gerät, wo die Steuerungsaktion ausgelöst wird.

Richtet sich das Steuerungskommando an ein Gerät, welches dem Infrarot-Geber 2 zugeordnet ist, so erfolgt die Ausgabe des Steuerungskommandos über die RS 232 Schnittstelle an den Infrarot-Geber 2, von dem das Steuerungskommando per Infrarotstrahlung an das betreffende Gerät übertragen wird.

Solange die Telefonverbindung mit der ISDN-Karte fortbesteht, kann der Benutzer weitere Sprachkommandos abgeben, die nacheinander von dem Steuerungssystem verarbeitet werden. Zur Beendigung der Eingabe von Sprachkommandos beendet der Benutzer die Telefonverbindung zu der ISDN-Karte.

Für den Fall, dass der Benutzer die Telefonverbindung nicht beendet, hat der PC 1 eine softwaregesteuerte Zeitsperre, die das Steuerungssystem in einen sicheren Zustand versetzt, aus dem nur ein einziges, im normalen Sprachgebrauch unübliches Sprachkommando wieder herausführt. Dies ist insbesondere dann vorteilhaft, wenn der Anwender ein schnurloses Telefon mit Kopfhörer am Körper trägt und ständig mit dem System verbunden bleibt, da er seine Umwelt damit steuern möchte (bei Behinderungen oder für altersschwache Menschen).

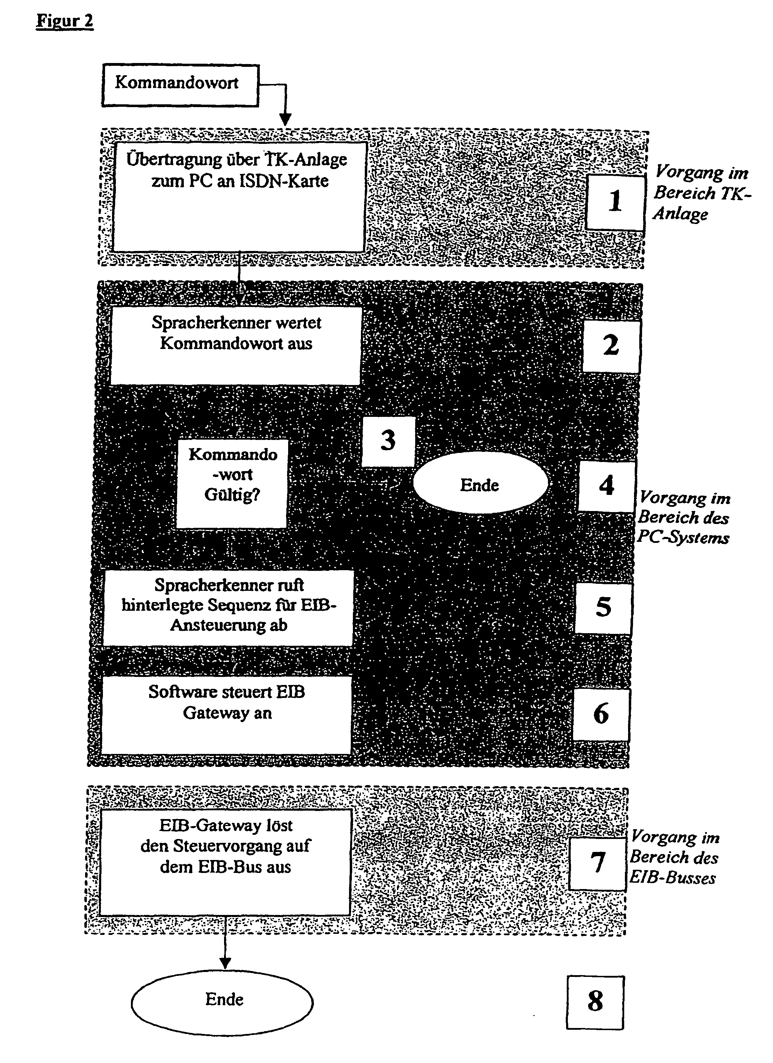

Mit Bezugnahme auf die Figur 2 wird nun ein Ausführungsbeispiel des erfindungsgemäßen Steuenangsverfahrens näher erläutert:

In dem Schritt 1 wird zunächst eine Telefonverbindung mit der ISDN-Karte eines PCs über eine TK-Anlage hergestellt. Über diese Telefonverbindung erfolgt dann die Eingabe eines Sprachkommandos in einen Eingang des PCs. Dieser Eingabevorgang erfolgt also über TK-Anlage.

In dem Schritt 2 wird das in dem Schritt 1 von dem Benutzer eingegebene Sprachkommando von einer Spracherkennungssoftware ausgewertet und erkannt. In dem Schritt 3 wird das erkannte Sprachkommando daraufhin überprüft, ob es sich um ein gültiges Kommandowort handelt, dem ein Steuerungskommando zugeordnet werden kann. Falls eine solche Zuordnung nicht möglich ist, endet der Programmablauf in dem Schritt 4. Sobald ein weiteres Sprachkommando durch den Benutzer über die Telefonverbindung eingegeben wird, verzweigt der Ablaufplan wieder zu dem Schritt 1.

Für den Fall, dass in dem Schritt 3 das Sprachkommando als gültiges Kommandowort erkannt wird, erfolgt in dem Schritt 5 eine Zuordnung eines entsprechenden Steuerungskommandos zu dem erkannten Sprachkommando. Zur Durchführung dieser Zuordnung ruft die Spracherkennungssoftware das dem erkannten Sprachkommando entsprechende Steuerungskommando für die EIB-Ansteuerung ab. Dabei kann es sich auch um eine Sequenz von Steuerungskommandos handeln. Die den gültigen Sprachkommandos entsprechenden Steuerungskommandos bzw. Sequenzen von Steuerungskommandos sind in einem Speicher des Steuerungssystem hinterlegt.

In dem Schritt 6 wird das Steuerungskommando bzw. die Sequenz von Steuerungskommandos über ein EIB-Gateway softwaregesteuert auf einen EIB-Instabus ausgegeben. Die Schritte 2 bis 6 laufen im wesentlichen im Bereich des PC-Systems ab. Die Sequenzen werden in der Software abgelegt und machen damit die für solche Zwecke üblicherweise nötige Hardware ( zum Beispiel: Szenenbausteine für EIB) überflüssig.

In dem Schritt 7 werden Schaltvorgänge auf dem EIB-Instabus aufgrund der von dem EIB-Gateway auf den EIB-Instabus ausgegebenen Steuerungskommandos ausgelöst. Der Schritt 7 spielt sich also im wesentlichen im Bereich des EIB-Instabus ab.

Nach Ausführung des Schrittes 7 endet der Programmablauf in dem Schritt 8, solange der Benutzer kein weiteres Sprachkommando eingibt,oder die Zeitsperre aktiv wird, was wiederum zu einer Verzweigung zu dem Schritt 1 führen würde.

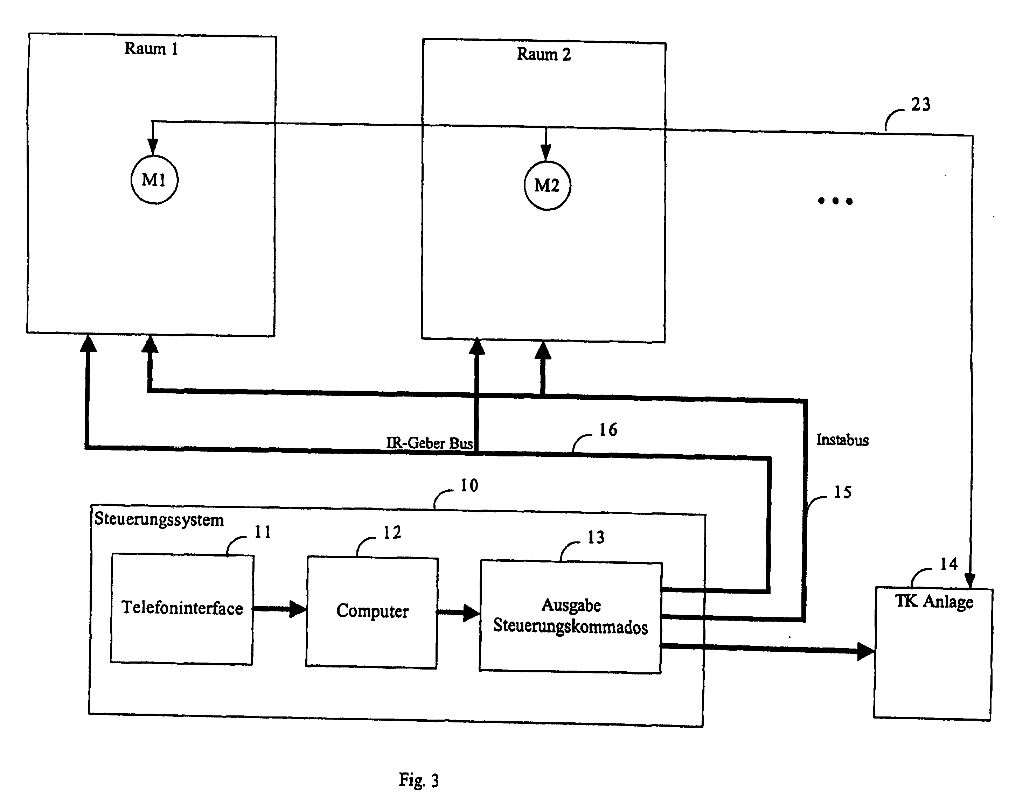

Die Figur 3 zeigt ein Steuerungssystem 10, welches zur Steuerung von verschiedenen Komponenten in den Räumen eines Gebäudes dient. Die Figur 3 zeigt exemplarisch den Raum 1 und den Raum 2 des Gebäudes. Sowohl in dem Raum 1 als auch in dem Raum 2 befindet sich je eine Deckenbeleuchtung, ein Radio, ein Videorekorder sowie ein Heizungsthermostat. Diese Komponenten sind in der Figur 3 der Übersichtlichkeit halber nicht gezeigt.

In dem Raum 1 befindet sich das Deckenmikrophon M1 mit einem an dieses gekoppelte Telefon-Modul; ein entsprechendes Deckenmikrophon M2 mit Telefon-Modul befindet sich auch in dem Raum 2 und in den weiteren in der Figur 3 nicht gezeigten Räumen des Gebäudes.

Das Steuerungssystem 10 weist ein Telefoninterface 11 für einen Computer 12 auf. Der Computer 12 ist an ein Interface 13 zur Ausgabe von Steuerungskommandos gekoppelt. Die Ausgabe der Steuerungskommandos erfolgt entweder an die Telekommunikationsanlage 14, den Hausinstallationsbus (Instabus) 15 oder den IR-Geber 16.

Über die Deckenmikrophone M1 und M2 wird ständig jeweils eine Kommunikationsverbindung 23 mit dem Telefoninterface 11 des Steuerungssystems 10 gehalten. Über diese Kommunikationsverbindungen werden nicht nur die von einem Benutzer gesprochenen Sprachkommandos, sondern auch Daten zur Identifizierung der jeweiligen Nebenstelle übertragen. Bei der Verwendung von ISDN oder DECT wird die jeweilige Nebenstellennummer während des Verbindungsaufbaus mit übertragen, so dass jeder der Telefonverbindungen eindeutig eine Nebenstellennummer als sogenannte Caller ID zugeordnet ist. Bei Verwendung von sog. Voice over IP Technologie wird entsprechend die IP-Adresse als Caller ID mit übertragen.

Sobald ein Benutzer beispielsweise den Raum 1 betritt, und ein Sprachkommando spricht, wird dieses über das Deckenmikrophon M1 bzw. dessen Telefonmodul und über die Telefonverbindung über das Telefoninterface 11 des Steuerungssystem 10 in den Computer 12 eingegeben. Dort wird das Sprachkommando mit der Spracherkennungssoftware erkannt. Danach wird eine Datenbankabfrage mit dem erkannten Sprachkommando und der entsprechenden Nebenstellennummer als Schlüssel durchgeführt, um auf die entsprechenden Steuerungskommandos zuzugreifen. Diese werden dann über die entsprechenden Kommunikationsmittel, d.h. zur Telekommunikationsanlage 14 oder über den Instabus 15 bzw. den IR-Geberbus 16 an das anzusteuernde Gerät übertragen.

Besonders vorteilhaft ist in diesem Zusammenhang die Verwendung einer Zeitsperre, die aktiv wird, nachdem innerhalb eines vorgegebenen Zeitraums keine Spracheingabe in einem bestimmten Raum registriert worden ist. Beispielsweise kann dieser Zeitraum 3 Minuten betragen. Wenn also z.B. in dem Raum 1 innerhalb von 3 Minuten kein Sprachkommando gesprochen wird, welches von dem Computer 12 erkannt wird, so wird die Zeitsperre in Bezug auf die Nebenstelle des Mikrophons M1 aktiviert. Nach Aktivierung der Zeitsperrung werden in dem Raum 1 gesprochene Sprachkommandos von dem Steuerungssystem 10 ignoriert mit Ausnahme eines vordefinierten Codeworts. Wird dieses Codewort in dem Raum 1 gesprochen, so wird dieses von dem Computer 12 erkannt, was zu einer Aufhebung der Zeitsperre führt.

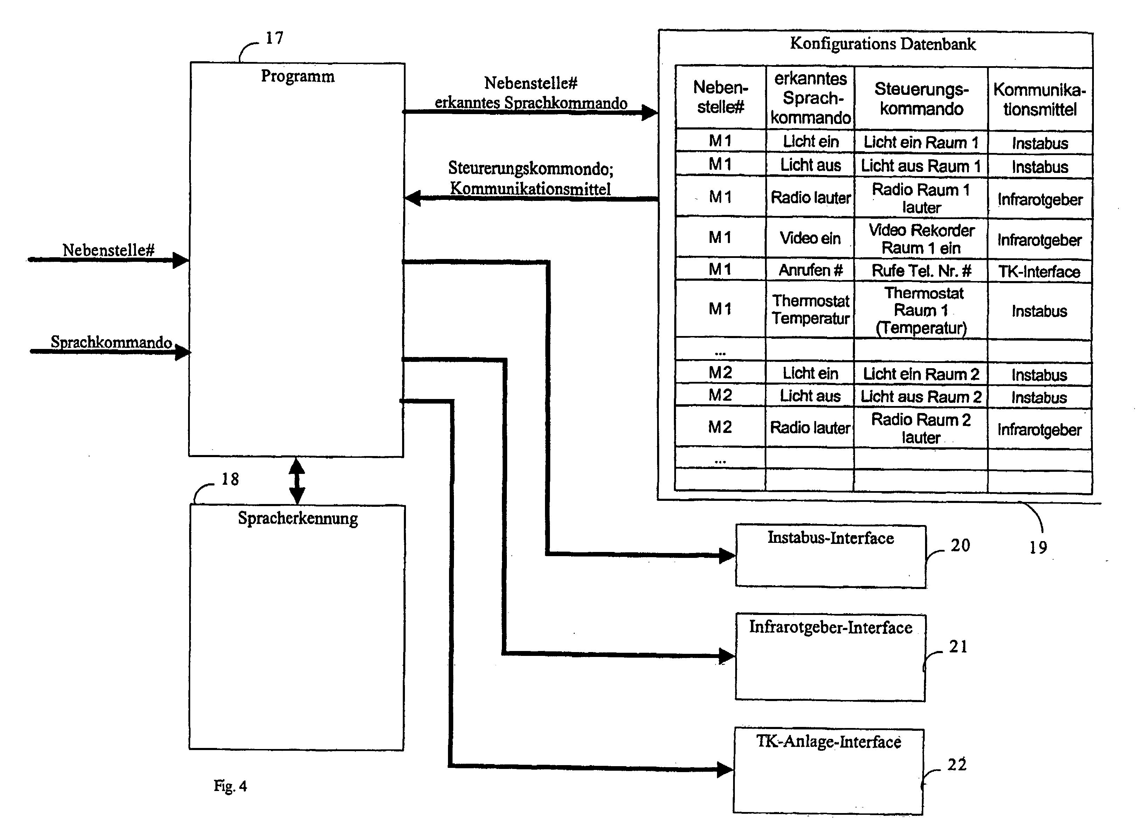

Mit Bezug auf die Figur 4 wird der Computer 12 im Weiteren näher beschrieben. Der Computer 12 weist ein Programm 17 auf, welches mit einem Spracherkennungsprogramm 18 kommuniziert. Ferner kommuniziert das Programm 17 mit einer Konfigurationsdatenbank 19. Das Programm 17 erhält als Eingabeparameter ein über eine Telefonverbindung übertragenes Sprachkommando sowie die dazugehörige Nebenstellennummer. Das Sprachkommando wird dem Spracherkennungsprogramm 18 zugeführt. Das erkannte Sprachkommando wird dann von dem Spracherkennungsprogramm an das Programm 17 ausgegeben. Das Programm 17 führt danach einen Datenbankzugriff auf die Konfigurationsdatenbank 19 mit dem aus der Nebenstellennummer und dem erkannten Sprachkommando gebildeten Datenpaar als Schlüssel zur Auffindung eines entsprechenden Steuerungskommandos aus der Konfigurationsdatenbank 19 aus.

Wird beispielsweise in dem Raum 1 von einer Person das Sprachkommando "Licht ein" gesprochen, so wird dieses Sprachkommando in das Programm 17 eingegeben wie auch die Nebenstellenummer der Nebenstelle des Mikrophons 1. Das natürlich sprachliche Sprachkommando "Licht ein" wird sodann von der Spracherkennung erkannt, worauf der entsprechende Zugriff auf die Konfigurationsdatenbank 19 folgt. In dem Beispiel der Figur 4 ergibt sich aus dem Datenpaar (Nebenstelle M1, erkanntes Sprachkommando: Licht ein) ein entsprechendes Steuerungskommando zur Ausgabe über den Instabus 15 der Figur 3, um die Deckenbeleuchtung des Raums 1 einzuschalten. Entsprechend können das Radio und der Videorekorder durch entsprechende Sprachkommandos in dem Raum 1 eingeschaltet werden, wobei die Ausgabe der entsprechenden Steuerungskommandos über den IR-Geberbus 16, der an entsprechende Infrarotgeber angeschlossen ist, erfolgt. Entsprechend ist auch der Heizungsthermostat in dem Raum 1 regelbar. In gleicher Art und Weise erfolgt die Steuerung für den Raum 2 und die weiteren in der Figur 3 nicht gezeigten Räume des Gebäudes. Die entsprechenden Steuerungskommandos werden von dem Programm 17 jeweils über entsprechende Interfaces 20, 21 und 22 ausgegeben.

## Patentansprüche

1. Steuerungssystem mit einem Computer (1; 12), mit Mitteln (3, 4, 5; 11) zur Herstellung von mindestens einer Telefonverbindung mit einem Eingang des Computers zur Eingabe eines Sprachkommandos und zur Eingabe von eine Nebenstelle identifizierenden Daten, mit Mitteln (18) zur Erkennung des Sprachkommandos, mit Mitteln (17, 19) zur Auswahl eines Steuerungskommandos basierend auf dem erkannten Sprachkommando und den die Nebenstelle identifizierenden Daten und mit Mitteln (6, 7; 20, 21, 22) zur Ausgabe des Steuerungskommandos über Kommunikationsmittel (8; 15, 16) wobei über die Telefonverbindung die Rufnummer des anrufenden Teilnehmers zu dem Eingang des Computers übertragen wird und in dem Computer eine Zuordnung von einem oder mehreren autorisierten Steuerungskommandos zu der Rufnummer definiert ist, so dass das Steuerungssystem nur für diese Rufnummer autorisierte Steuerungskommandos auf den externen Datenbus ausgibt.

2. Steuerungssystem nach Anspruch 1, wobei jede Sprachverbindung (M1, M2...), zur Eingabe von Sprachkommandos, ständig aufrecht gehalten wird und räumlich zugeordnet ist, damit ein mehrfach vergebenes Sprachkommando (z.B. Licht ein) aufgrund der übertragenen Rufnummer des Anrufers (M1, M2...) und des gültigen Sprachkommandos (Licht ein) dem jeweils zugeordneten Objekt (z.B. Licht) in dem jeweils zugeordneten Raum über das entsprechende Kommunikationsmittel (8; 15,16) eindeutig zugeordnet werden kann.

3. Steuerungssystem nach einem der vorhergehenden Ansprüche, wobei von jeder Sprachverbindung aus (M1, M2...) Sprachkommandos auch Steuerungskommandos auslösen können, die Aktionen über die räumliche Zuordnung hinaus möglich machen (z.B. "alle Rollläden abwärts").

4. Steuerungssystem nach einem der vorhergehenden Ansprüche, wobei eine Teilmenge der Steuerungskommandos zumindest für eine Teilmenge der Teilnehmer autorisiert ist.

5. Steuerungssystem nach einem der vorhergehenden Ansprüche, wobei es sich bei dem Kommunikationsmittel um einen Hausinstallationsbus (8; 15), vorzugsweise einen EIB Instabus, einen CAN Bus oder einen Bus nach dem JINI Standard handelt.

6. Steuerungssystem nach einem der vorhergehenden Ansprüche, wobei die Mittel zur Ausgabe mit Infrarot-Ausgabemitteln (2) verbindbar sind.

7. Steuerungssystem nach Anspruch 6 mit einer Entscheidungseinheit (1; 17, 19) zur Entscheidung, ob ein Steuerungskommando über die Infrarot-Ausgabemittel ausgegeben werden soll, wobei die Zuordnung von zu steuernden Geräten zu den Infrarot-Ausgabemitteln bzw. zu dem Datenbus in der Entscheidungseinheit definierbar ist.

8. Steuerungssystem nach einem der vorhergehenden Ansprüche, wobei die Mittel zur Herstellung einer Telefonverbindung eine oder mehrere Kommunikationseinheiten, vorzugsweise ISDN Karten, zum Anschluss des Computers an eine TK Anlage beinhalten.

9. Steuerungssystem nach Anspruch 8, wobei an einen Eingang der TK Anlage ein Telefon (4, 5), vorzugsweise ein schnurloses Telefon, anschliessbar ist.

10. Steuerungssystem nach einem der vorhergehenden Ansprüche mit einer Zeitsperre, wobei die Zeitsperre aktiv wird, nachdem ein vorgegebener Zeitraum nach Empfang eines Steuerungskommandos verstrichen ist, ohne dass ein weiteres Steuerungskommando empfangen wurde, und die Zeitsperre durch Eingabe eines vordefinierten Sprachkommandos wieder entsperrbar ist.

11. Steuerungssystem nach einem der vorhergehenden Ansprüche, wobei die Mittel zur Ausgabe von Steuerungskommandos ein Gateway (6) zur Verbindung mit dem externen Datenbus aufweisen.

12. Steuerungssystem nach Anspruch 11, wobei die Mittel zur Ausgabe von Steuerungskommandos eine LAN Netzkarte zur Verbindung des Computers über ein LAN, vorzugsweise über ein Ethernet, mit dem Gateway aufweisen.

13. Steuerungssystem nach Anspruch 12, wobei die LAN Netzwerkkarte und das Gateway so ausgebildet sind, dass das TCP/TP Protokoll zur Kommunikation über das LAN mit dem Gateway verwendbar ist.

14. Steuerungssystem nach einem der vorhergehenden Ansprüche, wobei die Mittel zur Zuordnung von Steuerungskommandos zu den erkannten Sprachkommandos auf eine Datenbank (19) zugreifen können, wobei die Datenbank Informationen über die zu steuernde Gerätekonfiguration beinhaltet.

15. Steuerungssystem nach einem der vorhergehenden Ansprüche, wobei das Steuerungssystem über die Telefonverbindung dem anrufenden Teilnehmer eine Rückmeldung gibt für den Fall, dass der Teilnehmer ein Sprachkommando eingibt, welches als nicht autorisiertes Steuerungskommando erkannt wird.

16. Steuerungssystem nach einem der vorhergehenden Ansprüche, wobei die Steuerungskommandos auch zur Steuerung von Telefonfunlctionen und/oder Anrufbeantworterfunktionen dienen können.

17. Steuerungssystem nach einem der vorhergehenden Ansprüche, wobei die Steuerungskommandos auch zur Steuerung von Datenabfrage- und/oder Datenverwaltungsfunktionen dienen können, insbesondere zur Steuerung der akustischen Ausgabe vom Emails.

18. Verfahren zur Steuerung eines oder mehrerer Geräte mit folgenden Schritten:
a) Herstellung einer Telefonverbindung mit einem Eingang eines Computers,
b) Auswertung der rufenden Nebenstelle identifizierenden Daten,
c) Eingabe eines Sprachkommandos in den Eingang über die Telefonverbindung,
d) Erkennung des Sprachkommandos,
e) Zuordnung eines Steuerungskommandos zu dem erkannten Sprachkommando unter Berücksichtigung der Nebenstellennummer (CLIP) und
f) Ausgabe des Steuerungskommandos über Kommunikationsmittel.

19. Verfahren nach Anspruch 18 , wobei in dem Computer eine Zuordnung von einem oder mehreren autorisierten Steuerungskommandos zu einer Rufnummer eines Teilnehmers definiert ist, mit folgenden weiteren Schritten:
Übertragung der Rufnummer des anrufenden Teilnehmers zu dem Eingang des Computers und Überprüfung, ob ein von dem Teilnehmer eingegebenes Sprachkommando einem für diesen Teilnehmer autorisierten Steuerungskommando entspricht.

20. Verfahren nach Anspruch 19, wobei es sich bei dem Kommunikationsmittel um einen Hausinstallationsbus, vorzugsweise einen EIB Instabus, einen CAN Bus oder einen Bus nach dem JINI Standard handelt.

21. Verfahren nach Anspruch 19 oder 20, wobei die Ausgabe des Steuerungskommandos je nach dem zu steuernden Gerät entweder auf einen externen Datenbus oder über Infrarot-Ausgabemittel erfolgt.

22. Verfahren nach Anspruch 21 , wobei zur Entscheidung, ob die Ausgabe über den externen Datenbus oder die Infrarot-Ausgabemittel erfolgen soll, auf eine Datei, vorzugsweise eine Tabelle, zugegriffen wird, wobei die Datei die zu steuernden Geräte jeweils dem Datenbus oder den Infrarot-Ausgabemitteln zuordnet.

23. Verfahren nach einem der Ansprüche 18 bis 22, wobei der Computer eine Kommunikationseinheit, vorzugsweise eine ISDN Karte, zum Anschluss an eine TK Anlage aufweist und der Kommunikationseinheit eine bestimmte Rufnummer zugeordnet ist, und die Herstellung der Telefonverbindung durch Anwahl der bestimmten Rufnummer von einem Telefon, vorzugsweise einem an die TK Anlage gekoppelten schnurlosen Telefon oder einer Türfreisprecheinrichtung, erfolgt.

24. Verfahren nach einem der Ansprüche 18 bis 23 mit folgenden Schritten:
f) Aktivierung einer Zeitsperre, nachdem ein vorgegebener Zeitraum nach Empfang eines Sprachkommandos verstrichen ist, ohne dass ein weiteres Sprachkommando empfangen wurde und
g) Entsperrung der Zeitsperre durch Eingabe eines vordefinierten Sprachkommandos.

25. Verfahren nach einem der Ansprüche 18 bis 24, wobei die Ausgabe der Steuerungskommandos auf den externen Datenbus über ein LAN, vorzugsweise über ein Ethemet, und ein Gateway erfolgt und zur Kommunikation über das LAN das TCP/IP Protokoll verwendet wird.

26. Verfahren nach einem der Ansprüche 18 bis 25, wobei zur Zuordnung eines Steuerungskommandos zu dem erkannten Sprachkommando auf eine Datenbank zugegriffen wird, die Informationen über die zu steuernde Gerätekonfiguration beinhaltet.

27. Verfahren nach einem der vorhergehenden Ansprüche, wobei dem anrufenden Teilnehmer eine Rückmeldung gegeben wird für den Fall, dass der Teilnehmer ein Sprachkommando eingibt, welches als nicht autorisiertes Steuerungskommando erkannt wird.

28. Verfahren nach einem der Ansprüche 18 bis 27, wobei die Steuerungskommandos auch zur Steuerung von Telefbnfunktionen und/oder Anrufbeantworterfunktionen verwendet werden können.

29. Verfahren nach einem der Ansprüche 18 bis 28, wobei die Steuerungskommandos auch zur Steuerung von Datenabfrage- und/oder Datenverwaltungsfunktionen verwendet werden können, insbesondere zur Steuerung der akustischen Ausgabe vom Emails.

## Claims

1. Control system with a computer (1; 12), with means (3, 4, 5; 11) to produce at least one telephone connection with an input of the computer to input a voice command and to input data identifying an extension, with means (18) to recognise the voice command, with means (17, 19) to select a control command based on the recognised voice command and the data identifying the extension and with means (6, 7; 20, 21, 22) to output the control command through means of communication (8; 15, 16), in which the telephone number of the calling party is transferred to the input of the computer through the telephone connection and an allocation of one or several authorised control commands to the telephone number is defined in the computer, so that the control system only outputs control commands authorised for this telephone number to the external data bus.

2. Control system according to claim 1, in which each voice connection (M1, M2, etc) is constantly maintained to input voice commands and allocated spatially, so that a voice command given several times (light on for example) can be clearly allocated to the relevant item (light for example) in the relevant space through the relevant means of communication (8; 15, 16) based on the transferred telephone number of the caller (M1, M2, etc) and the valid voice command (light on).

3. Control system according to one of the previous claims, in which voice commands can also trigger control commands from each voice connection (M1, M2, etc), which make actions possible through spatial allocation ("all shutters down" for example).

4. Control system according to the previous claims in which some of the control commands are authorised for at least some of the parties.

5. Control system according to one of the previous claims, in which the means of communication is a European installation bus (8; 15), preferably an EIB Instabus, a CAN bus or a bus according to the JINI standard.

6. Control system according to one of the previous claims, in which the means of output can be connected with infrared means of output (2).

7. Control system according to claim 6 with a decision unit (1; 17, 19) to decide whether a control command should be output through the infrared means of output, in which the allocation of equipment to be controlled to the infrared means of output or the data bus can be defined in the decision unit.

8. Control system according to one of the previous claims, in which the means for producing a telephone connection include one or several communication units, preferably ISDN cards, for connecting the computer to a telecommunications device.

9. Control system according to claim 8, in which a telephone (4, 5), preferably a cordless telephone, can be connected to an input of the telecommunications device.

10. Control system according to one of the previous claims with time out, in which the time out becomes active after a preset period of time after receipt of a control command has elapsed without a further control command being received and the time out can be unblocked again by the input of a predefined voice command.

11. Control system according to one of the previous claims, in which the means to output control commands have a gateway (6) for connection with the external data bus.

12. Control system according to claim 11, in which the means to output control commands have a LAN network map for connecting the computer through a LAN, preferably an Ethernet, with the gateway.

13. Control system according to claim 12, in which the LAN network map and the gateway are made so that the TCP/IP protocol can be used for communicating through the LAN with the gateway.

14. Control system according to one of the previous claims, in which the means for allocating control commands to the recognised voice command can have access to a data bank (19), in which the data bank contains information on the equipment configuration to be controlled.

15. Control system according to one of the previous claims, in which the control system gives a response to the calling party through the telephone connection, if the party inputs a voice command which is recognised as an unauthorised control command.

16. Control system according to one of the previous claims, in which the control commands can also be used to control telephone functions and/or answering machine functions.

17. Control system according to one of the previous claims, in which the control commands can also be used to control data queries and/or data management functions, particularly to control the acoustic output of Emails.

18. Method to control one or several pieces of equipment with the following steps:
a) Setting up a telephone connection with an input of a computer,
b) Evaluation of data identifying the extension calling,
c) Input of a voice command into the input through the telephone connection,
d) Recognition of the voice command,
e) Allocation of a control command to the recognised voice command taking the extension number (CLIP) into consideration and
f) Output of the control command through the means of communication.

19. Method according to claim 18, in which an allocation of one or several authorised control commands to a telephone number of a party is defined in the computer with the following further steps:
Transfer of the telephone number of the calling party to the input of the computer and checking whether a voice command input by the party corresponds to a voice command authorised for this party.

20. Method according to claim 19, in which the means of communication is a European installation bus, preferably an EIB Instabus, a CAN bus or a bus according to the JINI standard.

21. Method according to claim 19 or 20, in which the output of the control command is made to an external data bus or through infrared means of output according to the equipment to be controlled.

22. Method according to claim 21, in which in order to decide whether the output should be made through the external data bus or the infrared means of output, a file, preferably a table is accessed, in which the file allocates the equipment to be controlled to the data bus or the infrared means of output accordingly.

23. Method according to one of claims 18 to 22, in which the computer has a communication unit, preferably an ISDN card, for connecting to a telecommunications device and a certain telephone number is allocated to the communication unit and the telephone connection is set up by the selection of a certain telephone number by a telephone, preferably a cordless telephone connected to the telecommunications device or a hands-free door intercom.

24. Method according to one of claims 18 to 23 with the following steps:
f) activating time out after a preset period of time has elapsed following receipt of a voice command without a further voice command being received and
g) unblocking the time out by the input of a predefined voice command.

25. Method according to one of claims 18 to 24, in which the output of the control command is made to the external data bus through a LAN, preferably through an Ethernet and a gateway and the TCP/IP protocol is used for communication through the LAN.

26. Method according to claims 18 to 25, in which a data bank is accessed in order to allocate a control command to the recognised voice command, which contains information on the equipment configuration to be controlled.

27. Method according to one of the previous claims, in which a response is given to the calling party, if the party inputs a voice command, which is recognised as an unauthorised control command.

28. Method according to one of claims 18 to 27, in which the control commands can also be used to control telephone functions and/or answering machine functions.

29. Method according to one of claims 18 to 28, in which the control commands can also be used to control data queries and/or data management functions, particularly to control the acoustic output of e-mails.

## Revendications

1. Système de commande comprenant un ordinateur (1 ; 12), des moyens (3, 4, 5 ; 11) pour établir au moins une liaison téléphonique avec une entrée de l'ordinateur pour la saisie d'une commande par la voix et pour la saisie de données identifiant un poste supplémentaire, des moyens (18) pour la reconnaissance de la commande par la voix, des moyens (17, 19) pour la sélection d'une ordre de commande en se basant sur la commande par la voix reconnue et sur les données identifiant le poste supplémentaire, ainsi que des moyens (6, 7 ; 20, 21, 22) pour l'émission de l'ordre de commande via des moyens de communication (8 ; 15, 16), **caractérisé en ce que**, via la liaison téléphonique, le numéro d'appel de l'abonné appelant est transmis à l'entrée de l'ordinateur et, dans l'ordinateur, une affectation d'un ou de plusieurs ordres de commandes autorisés au numéro d'appel est définie, si bien que le système de commande n'émet des ordres de commandes autorisés sur le bus de données externe que pour ce numéro d'appel.

2. Système de commande selon la revendication 1, **caractérisé en ce que** chaque liaison vocale (M1, M2...), pour la saisie de commandes par la voix, est toujours maintenue en attente et est toujours soumise à une affectation spatiale, de telle sorte qu'une commande par la voix (par exemple « allumer ») plusieurs fois attribuée sur base du numéro d'appel de l'appelant qui a été transmis (M1, M2...) et sur base de la commande par la voix valide (« allumer ») peut faire l'objet d'une affectation univoque avec l'objet qui lui est respectivement affecté (par exemple la lumière) dans l'espace qui lui est respectivement affecté via le moyen de communication correspondant (8 ; 15, 16).

3. Système de commande selon l'une quelconque des revendications précédentes, **caractérisé en ce que** des ordres de commandes peuvent également être émis par chaque liaison vocale (M1, M2...) à partir de commandes par la voix, lesdits ordres permettant de mettre en oeuvre des actions via l'attribution spatiale (par exemple « baisser tous les volets »).

4. Système de commande selon l'une quelconque des revendications précédentes, **caractérisé en ce qu'**une quantité partielle des ordres de commandes est autorisée au moins pour une quantité partielle des abonnés.

5. Système de commande selon l'une quelconque des revendications précédentes, **caractérisé en ce que**, en ce qui concerne le moyen de communication, il s'agit d'un bus d'installation intérieure (8 ; 15), de préférence d'un Instabus EIB, d'un bus CAN ou encore d'un bus selon la norme JINI.

6. Système de commande selon l'une quelconque des revendications précédentes, **caractérisé en ce que** les émetteurs peuvent être reliés à des émetteurs infrarouge (2).

7. Système de commande selon la revendication 6, comprenant une unité de décision (1 ; 17, 19) pour prendre une décision quant au fait de savoir si un ordre de commande doit être émis via les émetteurs infrarouge, **caractérisé en ce que** l'attribution d'appareils à commander aux émetteurs infrarouge, respectivement au bus de données, peut être définie dans l'unité de décision.

8. Système de commande selon l'une quelconque des revendications précédentes, **caractérisé en ce que** les moyens pour établir une liaison téléphonique contiennent une ou plusieurs unités de communication, de préférence des cartes ISDN, pour le raccordement de l'ordinateur à une installation TK.

9. Système de commande selon la revendication 8, **caractérisé en ce qu'**un téléphone (4, 5), de préférence un téléphone sans fil, peut être raccordé à une entrée de l'installation TK.

10. Système de commande selon l'une quelconque des revendications précédentes, comprenant un délai d'attente, **caractérisé en ce que** le délai d'attente est activé après qu'un laps de temps prédéfini se soit écoulé après la réception d'un ordre de commande, sans avoir reçu un ordre de commande ultérieur, le délai d'attente pouvant être à nouveau supprimé via l'entrée d'une commande par la voix prédéfinie.

11. Système de commande selon l'une quelconque des revendications précédentes, **caractérisé en ce que** les moyens pour l'émission d'ordres de commandes présentent un centre terminal (6) à des fins de liaison avec le bus de données externe.

12. Système de commande selon la revendication 11, **caractérisé en ce que** les moyens pour l'émission d'ordres de commandes présentent une carte de réseau local d'entreprise (LAN) pour la liaison de l'ordinateur via un LAN, de préférence via un Ethernet, avec le centre terminal.

13. Système de commande selon la revendication 12, **caractérisé en ce que** la carte de réseau LAN et le centre terminal sont réalisés de telle sorte que le protocole TCP/IP peut être utilisé à des fins de communication via le LAN avec le centre terminal.

14. Système de commande selon l'une quelconque des revendications précédentes, **caractérisé en ce que** les moyens pour l'attribution d'ordres de commandes à la commande par la voix reconnue peuvent accéder à une banque de données (19), la banque de données (19) contenant des informations concernant la configuration des appareils à commander.

15. Système de commande selon l'une quelconque des revendications précédentes, **caractérisé en ce que** le système de commande envoie un message en retour, via la liaison téléphonique, à l'abonné appelant, dans le cas où l'abonné introduit une commande par la voix qui est reconnue comme étant une ordre de commande non autorisée.

16. Système de commande selon l'une quelconque des revendications précédentes, **caractérisé en ce que** les ordresd de commandes peuvent également servir à la commande de fonctions téléphoniques et/ou de fonctions de répondeurs à des appels.

17. Système de commande selon l'une quelconque des revendications précédentes, **caractérisé en ce que** les ordres de commandes peuvent également servir à la commande de fonctions de demande de données et/ou de gestion de données, en particulier à la commande de l'émission acoustique de messages électroniques.

18. Procédé pour la commande d'un ou de plusieurs appareils, comprenant les étapes ci-après consistant à :
a) établir une liaison téléphonique avec une entrée d'un ordinateur ;
b) évaluer les données identifiant le poste supplémentaire appelant ;
c) saisir une commande par la voix dans l'entrée via la liaison téléphonique ;
d) reconnaître la commande par la voix ;
e) attribuer un ordre de commande à la commande par la voix reconnue en prenant en compte le numéro du poste supplémentaire (CLIP) ; et
f) envoyer l'ordre de commande via des moyens de communication.

19. Procédé selon la revendication 18, **caractérisé en ce que**, dans l'ordinateur, une attribution d'un ou de plusieurs ordres de commandes autorisés à un numéro d'appel d'un abonné est définie, le procédé comprenant les étapes supplémentaires ci-après consistant à :
transmettre le numéro d'appel de l'abonné appelant à l'entrée de l'ordinateur et vérifier le fait de savoir si une commande par la voix entrée par l'abonné correspond à un ordre de commande autorisé pour cet abonné.

20. Procédé selon la revendication 19, **caractérisé en ce que**, en ce qui concerne le moyen de communication, il s'agit d'un bus d'installation intérieure, de préférence d'un Instabus EIB, d'un bus CAN ou encore d'un bus selon la norme JINI.

21. Procédé selon la revendication 19 ou 20, **caractérisé en ce que** l'émission de l'ordre de commande a lieu, en fonction de l'appareil à commander respectif, soit sur un bus de données externe, soit via des émetteurs infrarouge.

22. Procédé selon la revendication 21, **caractérisé en ce que**, à des fins de décision quant au fait de savoir si l'émission doit être mise en oeuvre via le bus de données externe ou via les émetteurs infrarouges, on accède à un fichier de données, de préférence à une table, le fichier de données attribuant les appareils à commander respectivement au bus de données ou aux émetteurs infrarouge.

23. Procédé selon l'une quelconque des revendications 18 à 22, **caractérisé en ce que** l'ordinateur présente une unité de communication, de préférence une carte ISDN pour le raccordement à une installation TK et un numéro d'appel déterminé est attribué à l'unité de communication, l'établissement de la liaison téléphonique ayant lieu par la sélection du numéro d'appel déterminé d'un téléphone, de préférence d'un téléphone sans fil couplé à l'installation TK, ou d'un ouvre-porte.

24. Procédé selon l'une quelconque des revendications 18 à 23, comprenant les étapes ci-après consistant à :
f) activer un délai d'attente, après qu'un laps de temps prédéfini se soit écoulé après la réception d'une commande par la voix, sans avoir reçu une commande par la voix ultérieure ; et
g) supprimer le délai d'attente via l'entrée d'une commande par la voix prédéfinie.

25. Procédé selon l'une quelconque des revendications 18 à 24, **caractérisé en ce que** l'émission des ordres de commandes sur le bus de données externe a lieu via un LAN, de préférence via un Ethernet, et via un centre terminal, le protocole TCP/IP étant utilisé pour la communication via le LAN.

26. Procédé selon l'une quelconque des revendications 18 à 25, **caractérisé en ce que**, pour l'attribution d'un ordre de commande à la commande par la voix reconnue, on accède à une banque de données, qui contient des informations concernant la configuration des appareils à commander.

27. Procédé selon l'une quelconque des revendications précédentes, **caractérisé en ce qu'**un message en retour est envoyé, via la liaison téléphonique, à l'abonné appelant, dans le cas où l'abonné introduit une commande par la voix qui est reconnue comme étant une ordre de commande non autorisé.

28. Procédé selon l'une quelconque des revendications 18 à 27, **caractérisé en ce que** les ordres de commandes peuvent également être utilisés pour la commande de fonctions téléphoniques et/ou de fonctions de répondeurs à des appels.

29. Procédé selon l'une quelconque des revendications 18 à 28, **caractérisé en ce que** les ordres de commandes peuvent également être utilisés pour la commande de fonctions de demande de données et/ou de gestion de données, en particulier pour la commande de l'émission acoustique de messages électroniques.
